## Europäisches Patentamt
## European Patent Office
## Office européen des brevets

(11) Veröffentlichungsnummer: **0 239 742**
A2

(12) **EUROPÄISCHE PATENTANMELDUNG**

(21) Anmeldenummer: **87101329.8**

(22) Anmeldetag: **31.01.87**

(51) Int. Cl.³: **G 01 B 11/02**

(30) Priorität: **05.03.86 DE 3607163**

(43) Veröffentlichungstag der Anmeldung:
**07.10.87 Patentblatt 87/41**

(84) Benannte Vertragsstaaten:
**AT CH DE FR GB IT LI**

(71) Anmelder: **GRUNDIG E.M.V. Elektro-Mechanische Versuchsanstalt Max Grundig**
**Kurgartenstrasse 37**
**D-8510 Fürth(DE)**

(72) Erfinder: **Rumland, Rainer, Dipl.-Ing. (FH)**
**Fa. Grundig Kurgartenstrasse 37**
**D-8510 Fürth/Bay(DE)**

(54) Verfahren zur Erkennung der Lage von Gegenständen.

(57) Bei einem Verfahren zur Erkennung der Lage von Gegenständen, bei dem mittels einer Fernsehkamera und einer an die Kamera angeschlossenen Auswerteelektronik der Lagewinkel des zu erkennenden Gegenstandes ermittelt wird, wird der Gegenstand relativ zur Kamera in Drehung versetzt, so daß er als kreisendes Bild auf dem fotoelektrischen Wandler der Kamera dargestellt wird. Das Ausgangssignal der Kamera wird differenziert bzw. in mehrere Frequenzbereiche aufgespalten. Für das differenzierte Signal bzw. für jeden der Frequenzbereiche wird pro Vollumdrehung ein zum Energieinhalt proportionaler, den Gegenstand charakterisierender Signalverlauf gewonnen. Maxima und Minima dieses Signalverlaufs werden zur Berechnung des Lagewinkels des Gegenstandes verwendet.

FIG. 1

Croydon Printing Company Ltd.

- *1* -

VERFAHREN ZUR ERKENNUNG
DER LAGE VON GEGENSTÄNDEN


Beschreibung


Die vorliegende Erfindung betrifft ein Verfahren zur
Erkennung der Lage von Gegenständen, bei dem mittels
einer Fernsehkamera und einer an die Kamera angeschlossenen
Auswerteelektronik der Lagewinkel des zu erkennenden Gegenstandes ermittelt wird.

Bekannte Verfahren zur Erkennung von Gegenständen arbeiten
wie folgt: eine Fernsehkamera nimmt den zu erkennenden
Gegenstand auf und erzeugt ein für den Gegenstand charakteristisches Videosignal. Dieses wird digitalisiert und
einer an die Kamera angeschlossenen Auswerteelektronik,
beispielsweise einem Rechner, zugeführt. Da ein aufgenommenes Bild bei den heute üblichen Systemen etwa 400 000
Bildpunkte aufweist und bei der Auswertung des Bildes jeder

...

- 2 -

Bildpunkt berücksichtigt werden muß, entsteht eine
außerordentlich hohe Datenmenge, welche der Rechner
verarbeiten muß. Die Errechnung der Bildkriterien
bzw. die Erkennung der Lage des Gegenstandes erfolgt
nach einem auf den jeweiligen Anwendungsfall zugeschnittenen Verfahren. Je nach Rechenaufwand können
auch detaillierte Merkmale des Gegenstandes ermittelt
und daraus beispielsweise Größen zur Steuerung eines
Roboters abgeleitet werden.

Der Erfindung liegt die Aufgabe zugrunde, ein Verfahren
der im Oberbegriff des Anspruchs 1 angegebenen Art dahingehend zu verbessern, daß die zu verarbeitende Datenmenge drastisch reduziert wird.

Diese Aufgabe wird durch die im kennzeichnenden Teil des
Anspruchs 1 angegebenen Merkmale gelöst.

Vorteilhafte Weiterbildungen ergeben sich aus den Unteransprüchen.

Die Vorteile der Erfindung sind darauf zurückzuführen,
daß bereits im analogen Signalbereich dafür gesorgt wurde,
daß die zu verarbeitende Datenmenge im Vergleich zu bekannten Verfahren drastisch reduziert wurde. Damit wird
eine schnellere Auswertung der Daten erreicht, d. h. das
beanspruchte Verfahren arbeitet in kürzerer Zeit als bisher bekannte Verfahren. Ferner können zur Auswertung der

...

-3-

Daten wesentlich kleinere Speicher verwendet werden
als bisher. Folglich ist auch die Anwendung des beanspruchten Verfahrens beispielsweise in der robotergesteuerten Fertigungstechnik kostengünstiger als bisher möglich.

Im folgenden wird die Erfindung anhand von Ausführungsbeispielen mit Hilfe der Figuren 1 - 6 näher erläutert.
Es zeigt

Figur 1    den grundsätzlichen Aufbau einer Anordnung zur
           Erläuterung des beanspruchten Verfahrens,

Figur 2    die Skizze eines Momentbildes eines mit der
           Kamera aufgenommenen Gegenstandes und zugehörige
           Signalverläufe,

Figur 3a   den aufzunehmenden Gegenstand zu 4 verschiedenen
bis
3d         Winkelstellungen bzw. Zeitpunkten sowie den jeweils zugehörigen Signalverlauf des differenzierten
           Signals,

Figur 3e   den Energieinhalt als Funktion des Winkels,

Figur 4a   den aufzunehmenden Gegenstand zu 4 verschiedenen
bis
4d         Winkelstellungen bzw. Zeitpunkten sowie den zugehörigen Signalverlauf des unbehandelten Signals,

...

- 4 -

Figur 4e    den Energieinhalt als Funktion des Winkels,

Figur 5    den Energieinhalt als Funktion des Winkels für
und
6    weitere Ausführungsbeispiele der Erfindung.


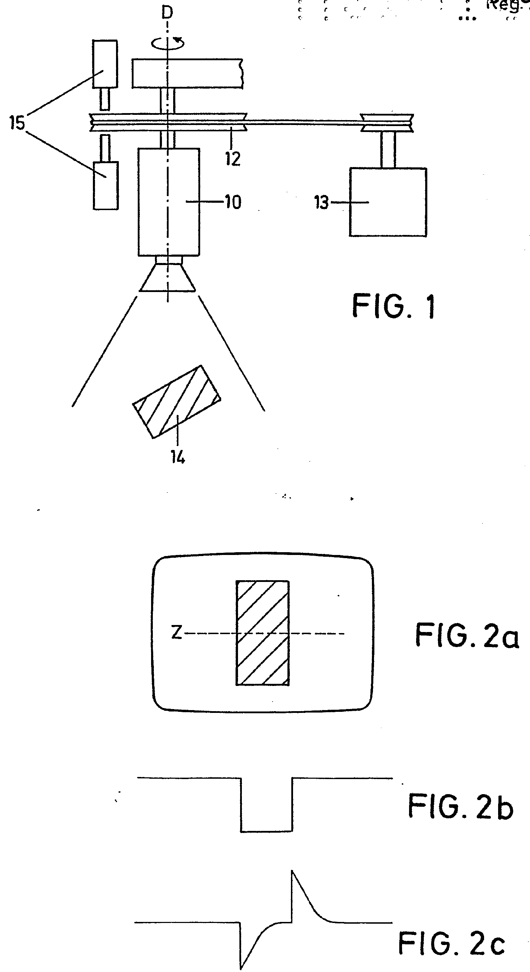

Die Figur 1 zeigt den grundsätzlichen Aufbau einer Anordnung
zur Erläuterung des beanspruchten Verfahrens. Eine handelsübliche Fernsehkamera 10 ist um eine Achse D drehbar gelagert und
wird über eine Riemenscheibe 12 von einem Motor 13 angetrieben. Die Kamera dreht sich beispielsweise mit einer Umdrehung pro Sekunde und nimmt einen Gegenstand, beispielsweise ein Werkstück 14 auf, welches auf einer feststehenden
Unterlage ruht. Die Riemenscheibe 12 besitzt an ihrer
Oberfläche ein kreisförmiges Strichraster mit beispielsweise
360 Strichen, die über den Umfang der Scheibe äquidistant verteilt sind. Mit dem Strichrasterleser 15 wird folglich pro
Grad Drehung der Kamera ein Impuls gewonnen. Der 360. Strich
des Strichrasters ist verstärkt, so daß der Strichrasterleser
an dieser Stelle einen breiteren Impuls erzeugt, welcher das
Ende einer vollen Umdrehung signalisiert.


Die Figur 2a zeigt die Skizze eines Momentbildes des mit
der Kamera 10 aufgenommenen Werkstückes 14. Die Linie z
soll eine Zeile der Abtastung der Kamera veranschaulichen.
Das zur Linie z gehörige Ausgangssignal der Kamera, welches
im folgenden als "unbehandeltes Signal" bezeichnet wird, ist
in Figur 2b gezeigt. Figur 2c zeigt das differenzierte Signal.

...

-5-

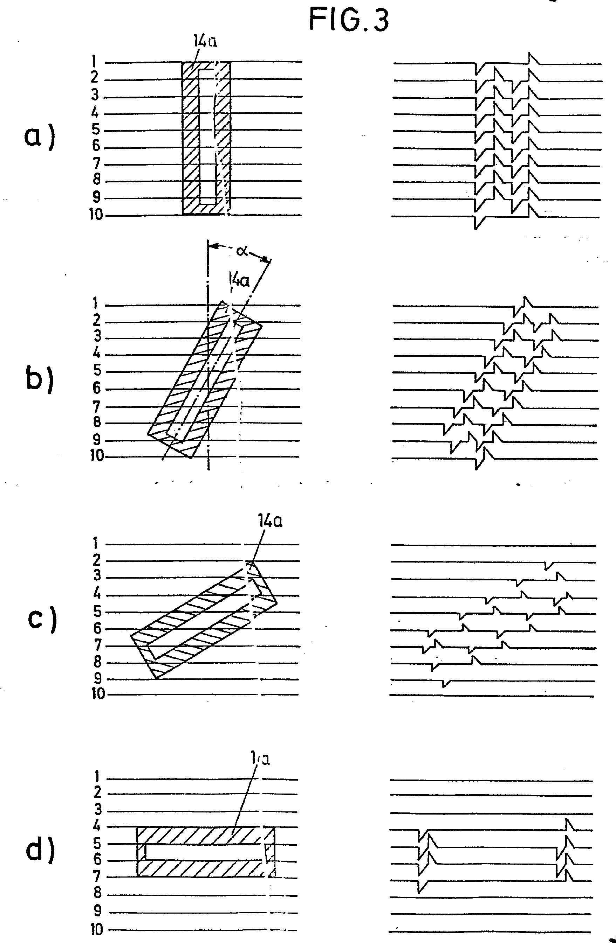

In Figur 3a - d ist links ein aufzuzeichnender Gegenstand 14a zu vier verschiedenen Winkelstellungen bzw.
Zeitpunkten dargestellt, wobei der Gegenstand Winkellagen
zwischen 0° und 90° einnimmt. Der Gegenstand wird jeweils
zeilenweise abgetastet, wie es durch die Zeilen 1 - 10
angedeutet ist. Auf der rechten Seite von Figur 3a - d
ist jeweils der Signalverlauf des differenzierten Videosignals dargestellt.

Betrachtet man nun die Anzahl der Signalspitzen im
differenzierten Signal, so erkennt man, daß sie bei den
in Fig. 3a und b gezeigten Winkelstellungen größer ist
als bei der in Fig. 3c gezeigten Winkelstellung und daß
sie bei der in Figur 3c gezeigten Winkelstellung größer
ist als bei der In Figur 3d gezeigten Winkelstellung.
Ferner erkennt man, daß dort, wo der Abtaststrahl in
seinem Verlauf senkrecht zur Werkstückkante auftritt,
die Signalspitzen besonders groß und energiereich sind.

Je weiter man das Werkstück gegen die Abtastrichtung dreht,
desto weniger Signalspitzen treten auf. Zudem trifft der
Abtaststrahl zunehmend schräg auf die Abbildung der Werkstückkanten, so daß die durch Differentation erzeugten
Signalspitzen wegen der endlichen Apertur des Abtaststrahles
kleiner werden.

Betrachtet man den Energieinhalt, d. h. die Flächenanteile
unter den Signalspitzen, so sieht man, daß dann, wenn das
Werkstück eine Winkelstellung von 0° hat, die Energie hoch

- 6 -

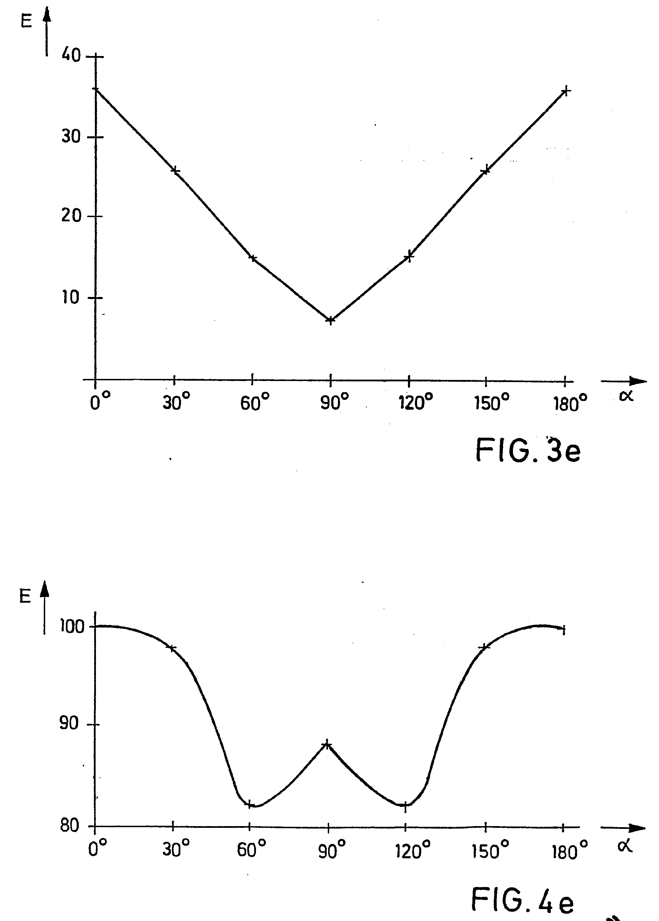

ist, während sie mit zunehmenden Winkel abnimmt und
schließlich bei einer Winkelstellung von 90° ein Minimum
aufweist. Wird der Winkel größer als 90°, dann steigt der
Energieinhalt wieder an und erreicht bei 180° ein Maximum.
Ein solcher Verlauf des Energieinhaltes als Funktion des
Winkels $\alpha$ ist in Figur 3e gezeigt.

Bei dem bisherigen Vorgehen wurden aufgrund der Differentation
des Videosignals nur die hochfrequenten Anteile des Signals
bzw. deren Energieinhalt betrachtet.

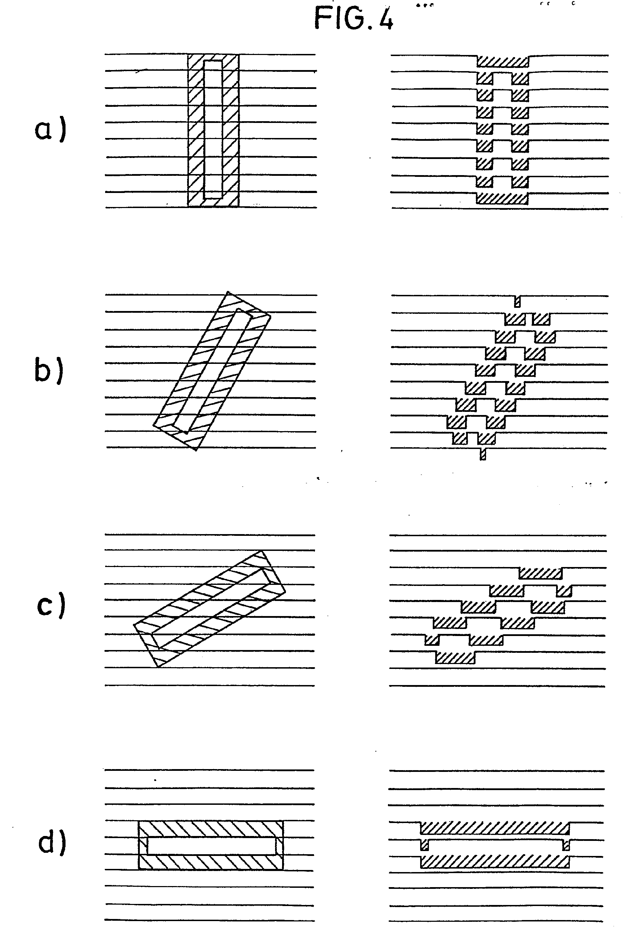

Nimmt man nun das unbehandelte Videosignal und führt die
gleichen Betrachtungen durch, so erkennt man, daß sich auch
in diesem Fall die Energieinhalte je nach Winkellage verändern.
Hierbei zeigt sich allerdings ein etwas anderer Verlauf des
Energieinhaltes. Ein Beispiel für den letztgenannten Fall
zeigen die Figuren 4a - d. In Figur 4e ist der zugehörige
Verlauf des Energieinhaltes dargestellt.

Ebenso würde sich bei einem über einen Bandpaß geleiteten
Videosignal wiederum ein anderer Verlauf des Energieinhaltes
ergeben.

Jede der drei auf diese Weise erhaltenen Energieinhaltskurven charakterisiert das aufgenommene Werkstück und dessen
Winkelstellung durch den jeweiligen charakteristischen Kurvenverlauf.

...

- 7-

Durch Auswertung der Umkehrpunkte (siehe beispielsweise
Fig. 3e) sind die Vorzugsrichtungen in dem Werkstück ohne
weiteres identifizierbar.

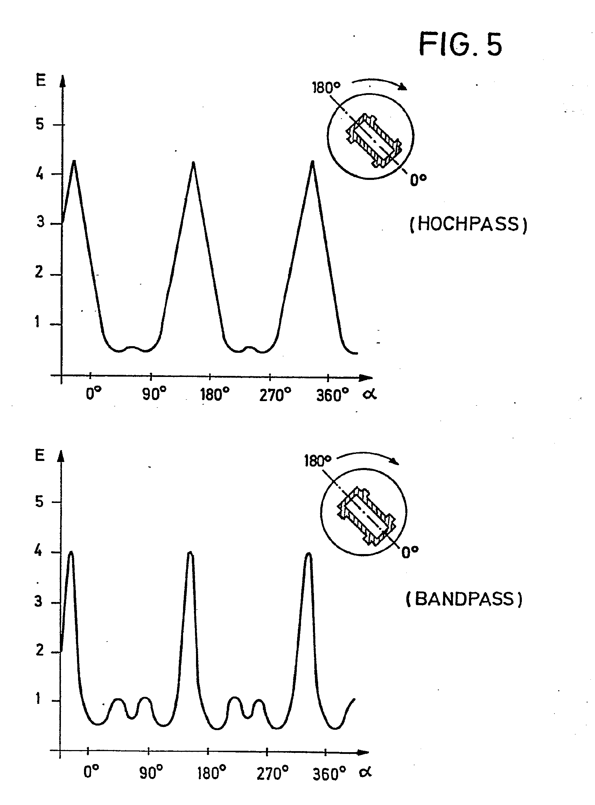

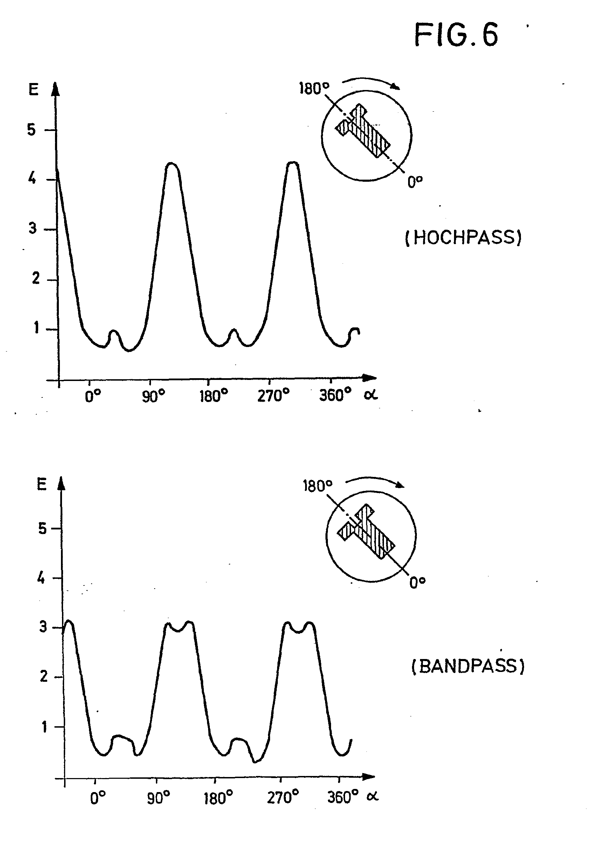

Weitere nach diesem Verfahren untersuchte Werkstücke und
die jeweiligen Energieinhaltskurven, die nach Hochpaß-
bzw. Bandpaßtfilterung des zugehörigen Videosignals erhalten werden, zeigen die in den Figuren 5 und 6 gezeigten
Ausführungsbeispiele. Aus dem jeweiligen Kurvenverlauf ist
ersichtlich, daß jedes Werkstück einem charakteristischen
Kurvenzug zugeordnet werden kann. Auch hier kann anhand
der Umkehrpunkte im Kurvenverlauf die Winkellage des jeweiligen Werkstückes bestimmt werden.

Zur weiteren Verarbeitung werden diese werkstücktypischen
Signale in relativ groben Schritten digitalisiert und einem
Rechner zugeführt. Zur ausreichend guten Unterscheidung verschiedener Werkstücke sind im allgemeinen Kurven, die durch
100 - 200 Punkte gekennzeichnet sind, vollkommen ausreichend.
Somit ist die zu verarbeitende Datenmenge im Rechner erheblich
reduziert. Dies bedeutet im Vergleich zu herkömmlichen Verfahren eine Datenreduktion um mehrere Zehnerpotenzen.

Im folgenden wird die Anwendung des beanspruchten Verfahrens
in der Praxis beispielhaft erläutert. Bei diesem Ausführungsbeispiel sollen zehn verschiedene Werkstücke unterschieden
und ihre Winkellage bestimmt werden.

...

- 8 -

Zunächst wird das erste Werkstück unter dem Winkel 0°
auf der feststehenden Unterlage ausgerichtet. Anschließend werden die Verläufe der Energieinhalte des
hochpaßgefilterten (= differenzierten), des bandpaßgefilterten und des tiefpaßgefilterten Signal ermittelt
und damit Signale gewonnen, die das erste Werkstück und
dessen Lage kennzeichnen. Diese werkstücktypischen Signale
werden digitalisiert und in einem Rechner abgespeichert.

Danach werden nach dem gleichen Schema die neun übrigen
Werkstücke aufgelegt, die zugehörigen werkstücktypischen
Signale gewonnen, diese digitalisiert und in den Rechner
übernommen.

Ist der Rechner auf diese Weise vorbereitet, dann kann
ein beliebiges der zehn Werkstücke unter beliebigem Winkel
aufgelegt werden. Die beschriebene Vorrichtung ermittelt
die zugehörigen Energieinhaltskurven, digitalisiert die
erhaltenen Werte und gibt sie an den Rechner weiter. Im
Rechner wird ein Vergleich mit den abgespeicherten, werkstücktypischen digitalisierten Signalen vorgenommen.
Dieser Vergleich erfolgt, indem die durch die digitalisierten
Signale gekennzeichneten Kurven gegeneinander verschoben
und auf Übereinstimmung untersucht werden. Zur Einsparung
von Rechenzeit ist es sinnvoll, anfangs nur wenige Punkte
einer Kurve zu benutzen und zwar solange, bis erstmals
Übereinstimmung festgestellt wird. Anschließend kann
schrittweise die Anzahl der Punkte erhöht werden, bis die
richtige Kurve eindeutig erkannt ist.

...

- 9 -

Durch das Verschieben der Kurven gegeneinander kann
auch die Winkelabweichung des Werkstücks zur $0^o$-Richtung
ermittelt werden. Mittels dieser Information kann beispielsweise die Hand eines an die beschriebene Meßvorrichtung angeschlossenen Roboters derart gesteuert werden, daß sie in die richtige Stellung zum Zugreifen gelangt.

Abschließend wird noch darauf hingewiesen, daß es bei
einfachen, spiegelbildlich aufgeteilten Werkstücken ausreicht, die Meßanordnung um $180^o$ zu drehen, während bei
unsymmetrischen Werkstücken eine Drehung um $360^o$ erforderlich ist.

Die Detail- bzw. Winkelgenauigkeit bei der Auswertung
sind stark von der Abtastnorm der Kamera abhängig. Einfache Werkstücke können bereits mit einer Kamera, die
nur wenige Zeilen schreibt, identifiziert werden.

Selbstverständlich ist es ebenso möglich, die erforderliche Drehung durch eine Drehung des Werkstückes selbst
bzw. seiner Unterlage hervorrufen und die Kamera fest
zu montieren. Auch kann die erforderliche Drehung durch
eine zwischen dem Werkstück und der Kamera angeordnete
optische Einrichtung bewirkt werden.

Die erforderliche Aufteilung des Signals kann durch Hochpaß- und/oder Bandpaß- und/oder Tiefpaßfilter oder durch
Differentiation bzw. Integration des Videosignals erfolgen.

- 10 -

Ferner kann die Fernsehkamera auch mit einer höheren
oder tieferen Bildwechselfrequenz und/oder Zeilenfrequenz, bezogen auf die gängigen Abtastnormen, betrieben werden.

*1*

VERFAHREN ZUR ERKENNUNG
DER LAGE VON GEGENSTÄNDEN

Patentansprüche

1. Verfahren zur Erkennung der Lage von Gegenständen,
bei dem mittels einer Fernsehkamera und einer an die Kamera
angeschlossenen Auswerteelektronik der Lagewinkel des
Gegenstandes ermittelt wird, d a d u r c h  g e k e n n -
z e i c h n e t ,  daß

- der Gegenstand relativ zur Kamera in Drehung versetzt
  wird, so daß er als kreisendes Bild auf dem fotoelektrischen
  Wandler der Kamera dargestellt wird,

- aus dem Ausgangssignal der Kamera mindestens ein Frequenzbereich ausgewählt wird,

- für jeden der ausgewählten Frequenzbereiche pro Vollumdrehung ein zum Energieinhalt proportionaler, den Gegenstand und dessen Lage charakterisierender Signalverlauf
  gewonnen wird,

- 2 -

- und die Maxima und Minima dieses Signalverlaufes zur Berechnung des Lagewinkels des Gegenstandes verwendet werden.

2. Verfahren nach Anspruch 1, d a d u r c h g e k e n n z e i c h n e t , daß die Drehung durch das Werkstück selbst oder durch seine Unterlage bewirkt wird.

3. Verfahren nach Anspruch 1, d a d u r c h g e k e n n z e i c h n e t , daß die Drehung des Werkstückes durch Drehung der Kamera bewirkt wird.

4. Verfahren nach Anspruch 1, d a d u r c h g e k e n n z e i c h n e t , daß die Drehung des Werkstückes durch eine optische Einrichtung, die zwischen Werkstück und Kamera angeordnet ist, bewirkt wird.

5. Verfahren nach einem der Ansprüche 1 - 4, d a - d u r c h g e k e n n z e i c h n e t , daß die Aufteilung in die verschiedenen Frequenzbereiche durch Differentation bzw. Integration des Videosignals erfolgt.

- 3 -

6. Verfahren nach einem der Ansprüche 1 - 4, d a - d u r c h g e k e n n z e i c h n e t , daß die Auf- teilung in die verschiedenen Frequenzbereiche durch Hoch-, Band- oder Tiefpässe vorgenommen wird.

7. Verfahren nach einem oder mehreren der vorher- gehenden Ansprüche, d a d u r c h g e k e n n z e i c h n e t , daß die gewonnenen Signalverläufe, die das Werkstück charakterisieren, digitalisiert werden, um in einem Rechner weiterverarbeitet zu werden.

8. Verfahren nach einem oder mehreren der vorher- gehenden Ansprüche, d a d u r c h g e k e n n z e i c h - n e t , daß die Fernsehkamera mit einer höheren oder niedrigeren Bildwechselfrequenz und/oder Zeilenfrequenz bezogen auf gängige Abtastnormen betrieben wird.

FIG. 1

FIG. 2a

FIG. 2b

FIG. 2c

# FIG.3

a)

14a

b)

α

14a

c)

14a

d)

1a

FIG. 3e

FIG. 4e

# FIG. 4

a)

b)

c)

d)

# FIG. 5

(HOCHPASS)

(BANDPASS)

# FIG.6

(HOCHPASS)

(BANDPASS)